# EUROPEAN PATENT APPLICATION

(11) **EP 4 394 949 A1**
(43) Date of publication of application: **03.07.2024**
(21) Application number: 22913580.1
(22) Date of filing: 27.09.2022
(51) Int. Cl.: H01M 4/587, H01M 4/38, H01M 4/36, H01M 10/0525

(54) **ELECTROCHEMICAL DEVICE AND ELECTRONIC DEVICE**

(30) Priority: 31.12.2021 CN 202111658562
(71) Applicant: Dongguan Amperex Technology Limited, Dongguan City, Guangdong Province 523000 (CN)
(72) Inventor: LI, Liang, Dongguan City, Guangdong Province, 523000 (CN)
(74) Representative: Icosa
(86) International application number: PCT/CN2022/121787
(87) International publication number: WO 2023/124315

(57) **Abstract**

An electrochemical apparatus includes a negative electrode plate, the negative electrode plate includes a negative electrode material layer, the negative electrode material layer includes a silicon-carbon composite material, the silicon-carbon composite material includes a porous carbon framework and a silicon material, Dᵥ50 of the silicon-carbon composite material is a µm, and 3≤a≤15, porosity of the negative electrode material layer is b%, and 0.15≤a/b≤1. The electrochemical apparatus provided in this application has good cycling performance, swelling performance, and rate performance.

## Description

This application claims priority to Chinese Patent Application No. 202111658562.1, filed with the China National Intellectual Property Administration on December 31, 2021 and entitled "ELECTROCHEMICAL APPARATUS AND ELECTRONIC APPARATUS", which is incorporated herein by reference in its entirety.

### TECHNICAL FIELD

This application relates to the field of electrochemical technologies, and in particular, to an electrochemical apparatus and an electronic apparatus.

### BACKGROUND

Lithium-ion batteries have advantages such as high energy storage density, high open-circuit voltage, low self-discharge rate, long cycle life, and high safety, and therefore are widely used in the fields such as portable electric energy storage, electronic devices, and electric vehicles. With the rapid development of lithium-ion batteries, higher requirements are imposed on the comprehensive performance of lithium-ion batteries. For example, lithium-ion batteries need to have both higher energy density and good cycling performance.

Silicon material has a high gram capacity (up to 4200 mAh/g) and therefore can significantly increase the energy density of lithium-ion batteries when used as the negative electrode active material of lithium-ion batteries. However, during intercalation and deintercalation of lithium ions, the silicon material swells greatly in volume, specifically, the volume of the silicon material may be increased to 300% to 400% of the original volume, and therefore, the silicon material is prone to have a cracking or pulverization problem, which causes pulverization of the negative electrode material layer in the negative electrode plate and hinders the formation of the solid electrolyte interface (SEI) film, degrading the cycling performance of the lithium-ion battery.

### SUMMARY

This application is intended to provide an electrochemical apparatus and an electronic apparatus to improve the cycling performance of electrochemical apparatuses.

A first aspect of this application provides an electrochemical apparatus including a negative electrode plate, where the negative electrode plate includes a negative electrode material layer, the negative electrode material layer includes a silicon-carbon composite material, the silicon-carbon composite material includes a porous carbon framework and a silicon material, a median particle size of the silicon-carbon composite material is a µm, satisfying 3≤a≤15, a porosity of the negative electrode material layer is b%, and the electrochemical apparatus satisfies 0.15≤a/b≤1. The porous carbon framework has a porous structure that can provide swelling space for the silicon material in the silicon-carbon composite material to buffer swelling stress generated during swelling. In addition, the median particle size of the silicon-carbon composite material and the ratio of the median particle size of the silicon-carbon composite material to the porosity of the negative electrode material layer are controlled to fall within the foregoing ranges, so that not only enough space can be provided for volume swelling of the silicon material in the silicon-carbon composite material, but also good electrical contact is implemented between particles of the silicon-carbon composite material, thereby improving the cycling performance and swelling performance of the electrochemical apparatus, and realizing good rate performance of the electrochemical apparatus.

In some embodiments of this application, the porosity b% of the negative electrode material layer satisfies 15≤b≤35. Controlling the porosity of the negative electrode material layer to fall within the foregoing range is conducive to improving the cycling performance and the swelling performance of the electrochemical apparatus, and realizing good rate performance of the electrochemical apparatus.

In some embodiments of this application, a compacted density of the negative electrode material layer ranges from 1.2 g/cm³ to 1.8 g/cm³. Controlling the compacted density of the negative electrode material layer to fall within the foregoing range is conducive to improving the cycling performance and the swelling performance of the electrochemical apparatus, and realizing good rate performance of the electrochemical apparatus.

In some embodiments of this application, based on a mass of the silicon-carbon composite material, a mass percentage of carbon in the silicon-carbon composite material is d%, satisfying 15≤d≤75, a mass percentage of silicon in the silicon-carbon composite material is e%, satisfying 15≤e≤75, and a mass percentage of oxygen in the silicon-carbon composite material ranges from 0.3% to 10%. Controlling the mass percentages of carbon, silicon, and oxygen in the silicon-carbon composite material to fall within the foregoing ranges is conducive to improving the cycling performance and the swelling performance of the electrochemical apparatus, and realizing good rate performance and higher specific capacity, first-cycle reversible capacity, and first-cycle coulombic efficiency of the electrochemical apparatus.

In some embodiments of this application, a pore volume of the porous carbon framework ranges from 0.5 mL/g to 2.0 mL/g, and based on the pore volume of the porous carbon framework, a pore volume percentage of micropores and mesopores ranges from 70% to 90%. The porous carbon framework has a large number of micropores and mesopores, the silicon material in the silicon-carbon composite material is distributed in pore structures of the micropores and mesopores to provide swelling space for the silicon material in the silicon-carbon composite material, which can buffer swelling stress generated during swelling, thereby improving the cycling performance and the swelling performance of the electrochemical apparatus.

In some embodiments of this application, the electrochemical apparatus includes an electrolyte, where the electrolyte includes ethylene carbonate, and based on a total mass of the electrolyte, a mass percentage of ethylene carbonate is f%, satisfying 5≤f≤30. Controlling the mass percentage of ethylene carbonate to fall within the foregoing range is conducive to improving the cycling performance and the rate performance of the electrochemical apparatus.

In some embodiments of this application, the electrochemical apparatus satisfies 0.2≤a/f≤2. Controlling the value of a/f to fall within the foregoing range is conducive to a synergistic effect between the silicon-carbon composite material and ethylene carbonate in the electrolyte, improving the cycling performance, swelling performance, and rate performance of the electrochemical apparatus.

In some embodiments of this application, the electrolyte includes propylene carbonate, and based on the total mass of the electrolyte, a mass percentage of propylene carbonate is g%, satisfying 5≤g≤40. Controlling the mass percentage of propylene carbonate to fall within the foregoing range is conducive to improving the cycling performance and the rate performance of the electrochemical apparatus.

In some embodiments of this application, a method for preparing the silicon-carbon composite material includes the following steps: (1) placing the porous carbon framework to a first deposition reaction in a silane atmosphere, where the pore volume of the porous carbon framework ranges from 0.5 mL/g to 2.0 mL/g, and based on the pore volume of the porous carbon framework, the pore volume percentage of micropores and mesopores ranges from 70% to 90%; and a volume percentage of silane in the silane atmosphere ranges from 1% to 30%, temperature of the first deposition reaction ranges from 400°C to 600°C, and time thereof ranges from 1 h to 12 h; and (2) then conducting a second deposition reaction in an oxygen atmosphere to obtain the silicon-carbon composite material, where a volume percentage of oxygen in the oxygen atmosphere ranges from 1% to 30%, temperature of the second deposition reaction ranges from 400°C to 800°C, and time thereof ranges from 1 h to 12 h. For the silicon-carbon composite material prepared according to the preparation method provided in this application, the silicon material is intercalated into the micropores and mesopores of the porous carbon framework, so that not only the advantage of high specific capacity of the silicon material can be exerted to improve the specific capacity of the electrochemical apparatus, but also the porous carbon framework provides enough space for the volume swelling of the silicon material to release the swelling stress caused by the volume swelling, which is conducive to improving the cycling performance and the swelling performance of the electrochemical apparatus.

A second aspect of this application provides an electronic apparatus including the electrochemical apparatus according to any one of the foregoing embodiments. The electrochemical apparatus provided in this application has good cycling performance, swelling performance, and rate performance, so the electronic apparatus provided in this application has a longer service life.

This application provides an electrochemical apparatus and an electronic apparatus, where the electrochemical apparatus includes a negative electrode plate, the negative electrode plate includes a negative electrode material layer, the negative electrode material layer includes a silicon-carbon composite material, the silicon-carbon composite material includes a porous carbon framework and a silicon material, a median particle size of the silicon-carbon composite material is a µm, satisfying 3≤a≤15, a porosity of the negative electrode material layer is b%, and the electrochemical apparatus satisfies 0.15≤a/b≤1. The porous carbon framework has a porous structure that can provide swelling space for the silicon material in the silicon-carbon composite material to buffer swelling stress generated during swelling. In addition, the median particle size of the silicon-carbon composite material and the ratio of the median particle size of the silicon-carbon composite material to the porosity of the negative electrode material layer are controlled to fall within the foregoing ranges, so that not only enough space can be provided for volume swelling of the silicon material in the silicon-carbon composite material, but also good electrical contact is implemented between particles of the silicon-carbon composite material, thereby improving the cycling performance and the swelling performance of the electrochemical apparatus, and realizing good rate performance of the electrochemical apparatus.

Certainly, implementing any embodiments of this application does not necessarily require all the advantages described above.

### DETAILED DESCRIPTION

To make the objectives, technical solutions, and advantages of this application clearer and more comprehensible, this application is further described in detail. Apparently, the described embodiments are merely some but not all of the embodiments of this application. All other embodiments obtained by persons of ordinary skill in the art based on the embodiments of this application without creative efforts shall fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

A first aspect of this application provides an electrochemical apparatus including a negative electrode plate, where the negative electrode plate includes a negative electrode material layer, the negative electrode material layer includes a silicon-carbon composite material, the silicon-carbon composite material includes a porous carbon framework and a silicon material, a median particle size of the silicon-carbon composite material is a µm, satisfying 3≤a≤15, and preferably 6≤a≤12, a porosity of the negative electrode material layer is b%, and the electrochemical apparatus satisfies 0.15≤a/b≤1, and preferably 0.3≤a/b≤1. For example, the median particle size of the silicon-carbon composite material may be 3 µm, 4 µm, 5 µm, 6 µm, 7 µm, 8 µm, 9 µm, 10 µm, 11 µm, 12 µm, 13 µm, 14 µm, 15 µm, or in a range defined by any two of these values, and the value of a/b may be 0.15, 0.2, 0.3, 0.4, 0.5, 0.6, 0.7, 0.8, 0.9, 1, or in a range defined by any two of these values.

The inventors of this application have found that when the median particle size of the silicon-carbon composite material is excessively small (for example, less than 3 µm), a specific surface area of the silicon-carbon composite material is increased, and the silicon-carbon composite material is very likely to have side reactions with the electrolyte, which affects cycling performance of the electrochemical apparatus. When the median particle size of the silicon-carbon composite material is excessively large (for example, greater than 15 µm), it is difficult to provide enough space for volume swelling of the silicon material in the silicon-carbon composite material, and it is impossible to effectively buffer swelling stress generated during swelling, thereby affecting the cycling performance and rate performance of the electrochemical apparatus. An excessively small value (for example, less than 0.15) or an excessively large value (for example, greater than 1) of a/b is not conducive to improving the cycling performance, the swelling performance, and the rate performance of the electrochemical apparatus. The porous carbon framework has a porous structure that can provide swelling space for the silicon material in the silicon-carbon composite material to buffer swelling stress generated during swelling. In addition, the median particle size of the silicon-carbon composite material and the value of a/b are controlled to fall within the foregoing ranges, so that not only enough space is provided for the volume swelling of the silicon material in the silicon-carbon composite material to fully exert the advantage of high gram capacity of the silicon material in the silicon-carbon composite material, but also good electrical contact is implemented between particles of the silicon-carbon composite material, thereby improving the cycling performance and the swelling performance (for example, a volume swelling ratio) of the electrochemical apparatus, and realizing good rate performance of the electrochemical apparatus.

In some embodiments of this application, a porosity of the negative electrode material layer is b%, satisfying 15≤b≤35, and preferably 18≤b≤30. For example, the porosity of the negative electrode material layer may be 15%, 20%, 25%, 30%, 35%, or in a range defined by any two of these values. When the porosity of the negative electrode material layer is excessively small (for example, less than 15%), it is impossible to provide enough space for volume swelling of the silicon material in the silicon-carbon composite material, thereby affecting the cycling performance and the swelling performance of the electrochemical apparatus. When the porosity of the negative electrode material layer is excessively large (for example, greater than 35%), the electrical contact between the particles of the silicon-carbon composite material is reduced, thereby affecting the rate performance of the electrochemical apparatus. Controlling the porosity of the negative electrode material layer to fall within the foregoing range can not only provide enough space for the volume swelling of the silicon material in the silicon-carbon composite material, but also implement good electrical contact between the particles of the silicon-carbon composite material, thereby improving the cycling performance and the swelling performance of the electrochemical apparatus, and realizing good rate performance of the electrochemical apparatus. The porosity of the negative electrode material layer refers to a percentage of the volume of pores in the negative electrode material layer to the volume of the negative electrode material layer.

In some embodiments of this application, a compacted density of the negative electrode material layer ranges from 1.2 g/cm³ to 1.8 g/cm³, and preferably 1.4 g/cm³ to 1.8 g/cm³. For example, the compacted density of the negative electrode material layer may be 1.2 g/cm³, 1.3 g/cm³, 1.4 g/cm³, 1.5 g/cm³, 1.6 g/cm³, 1.7 g/cm³, 1.8 g/cm³, or in a range defined by any two of these values. When the compacted density of the negative electrode material layer is excessively small (for example, less than 1.2 g/cm³), the porosity of the negative electrode material layer is increased, and the electrical contact between the particles of the silicon-carbon composite material is reduced, thereby affecting the rate performance of the electrochemical apparatus. When the compacted density of the negative electrode material layer is excessively large (for example, greater than 1.8 g/cm³), the porosity of the negative electrode material layer is reduced, and it is impossible to provide enough space for volume swelling of the silicon material to release swelling stress generated during swelling, thereby affecting the cycling performance and the swelling performance of the electrochemical apparatus. Controlling the compacted density of the negative electrode material layer to fall within the foregoing range is conducive to improving the cycling performance and the swelling performance of the electrochemical apparatus, and realizing good rate performance of the electrochemical apparatus.

In some embodiments of this application, based on a mass of the silicon-carbon composite material, a mass percentage of carbon in the silicon-carbon composite material is d%, satisfying 15≤d≤75, and preferably 40≤d≤75, a mass percentage of silicon in the silicon-carbon composite material is e%, satisfying 15≤e≤75, and preferably 40≤e≤75, and a mass percentage of oxygen in the silicon-carbon composite material ranges from 0.3% to 10%, and preferably 1% to 6%. For example, the mass percentage of carbon in the silicon-carbon composite material may be 15%, 20%, 30%, 40%, 50%, 60%, 70%, 75%, or in a range defined by any two of these values, the mass percentage of silicon in the silicon-carbon composite material may be 15%, 20%, 30%, 40%, 50%, 60%, 70%, 75%, or in a range defined by any two of these values, and the mass percentage of oxygen in the silicon-carbon composite material may be 0.3%, 0.5%, 1%, 2%, 3%, 4%, 5%, 6%, 7%, 8%, 9%, 10%, or in a range defined by any two of these values. It can be understood that there may be a small amount of impurities (a mass percentage thereof is less than 0.1%) in the silicon-carbon composite material. For ease of discussion, the impurities are ignored in this application, which means a sum of the mass percentages of silicon, carbon, and oxygen in the silicon-carbon composite material is 100%.

The inventors of this application have found that when the mass percentage of carbon in the silicon-carbon composite material is excessively low (for example, lower than 15%), it is impossible to provide enough swelling space for the silicon material in the silicon-carbon composite material, thereby affecting the cycling performance and the swelling performance of the electrochemical apparatus. When the mass percentage of carbon in the silicon-carbon composite material is excessively high (for example, higher than 75%), in which case the mass percentage of silicon is relatively low, it is impossible to effectively exert the advantage of high gram capacity of the silicon material in the silicon-carbon composite material, thereby affecting specific capacity of the electrochemical apparatus. Controlling the mass percentage of carbon in the silicon-carbon composite material to fall within the foregoing range is conducive to improving the cycling performance and the swelling performance of the electrochemical apparatus, and realizing higher specific capacity of the electrochemical apparatus.

When the mass percentage of silicon in the silicon-carbon composite material is excessively low (for example, lower than 15%), first-cycle reversible capacity of the electrochemical apparatus is affected, and it is also impossible to effectively exert the advantage of high gram capacity of the silicon material in the silicon-carbon composite material, thereby affecting specific capacity of the electrochemical apparatus. When the mass percentage of silicon in the silicon-carbon composite material is excessively high (for example, higher than 75%), in which case the mass percentage of carbon is relatively low, it is impossible to provide enough swelling space for the silicon material in the silicon-carbon composite material, thereby affecting the cycling performance and the swelling performance of the electrochemical apparatus. In addition, an excessively high mass percentage of silicon is not conducive to migration of lithium ions and electrons, thereby affecting the rate performance of the electrochemical apparatus. Controlling the mass percentage of silicon in the silicon-carbon composite material to fall within the foregoing range is conducive to improving the cycling performance and the swelling performance of the electrochemical apparatus, and realizing good rate performance and higher first-cycle reversible capacity and specific capacity of the electrochemical apparatus.

Oxygen in the silicon-carbon composite material forms, with lithium ions, an inert layer on a surface of the silicon-carbon composite material, which can improve swelling performance of the silicon material in the silicon-carbon composite material, thereby further improving the cycling performance and the swelling performance of the electrochemical apparatus. However, when the mass percentage of oxygen in the silicon-carbon composite material is excessively high (for example, higher than 10%), the formed inert layer affects the migration of lithium ions, thereby affecting the rate performance and first-cycle coulombic efficiency of the electrochemical apparatus. Controlling the mass percentage of oxygen in the silicon-carbon composite material to fall within the foregoing range is conducive to improving the cycling performance and the swelling performance of the electrochemical apparatus, and realizing good rate performance and higher first-cycle coulombic efficiency of the electrochemical apparatus.

In general, controlling mass percentages of carbon, silicon, and oxygen in the silicon-carbon composite material to fall within the foregoing range is conducive to improving the cycling performance and the swelling performance of the electrochemical apparatus, and realizing good rate performance and higher specific capacity, first-cycle reversible capacity, and first-cycle coulombic efficiency of the electrochemical apparatus.

In some embodiments of this application, the silicon-carbon composite material satisfies 0.5≤d/e≤5, and preferably 0.8≤d/e≤3. For example, the value of d/e may be 0.5, 1, 2, 3, 4, 5, or in a range defined by any two of these values. Controlling the value of d/e to fall within the foregoing range is conducive to improving the cycling performance and the swelling performance of the electrochemical apparatus, and realizing good rate performance of the electrochemical apparatus.

In some embodiments of this application, a pore volume of the porous carbon framework ranges from 0.5 mL/g to 2.0 mL/g, and preferably 0.8 mL/g to 2.0 mL/g, and based on the pore volume of the porous carbon framework, a pore volume percentage of micropores and mesopores ranges from 70% to 90%, and preferably 80% to 90%. For example, the pore volume of the porous carbon framework may be 0.5 mL/g, 0.6 mL/g, 0.7 mL/g, 0.8 mL/g, 0.9 mL/g, 1.0 mL/g, 1.1 mL/g, 1.2 mL/g, 1.3 mL/g, 1.5 mL/g, 1.8 mL/g, 2.0 mL/g, or in a range defined by any two of these values, and the pore volume percentage of micropores and mesopores is 70%, 75%, 80%, 85%, 90%, or in a range defined by any two of these values. The porous carbon framework has a large number of micropores and mesopores, the silicon material in the silicon-carbon composite material is distributed in pore structures of the micropores and mesopores to provide swelling space for the silicon material in the silicon-carbon composite material, which can buffer swelling stress generated during swelling, thereby improving the cycling performance and the swelling performance of the electrochemical apparatus. Herein, the pore volume percentage of micropores and mesopores refers to a percentage of a ratio of a sum of pore volumes of the micropores and mesopores to a pore volume of the porous carbon framework, the micropore refers to a pore with a pore diameter less than 2 nm, and the mesopore refers to a pore with a pore diameter between 2 nm and 50 nm.

In some embodiments of this application, the electrochemical apparatus includes an electrolyte, where the electrolyte includes ethylene carbonate (EC), and based on a total mass of the electrolyte, a mass percentage of ethylene carbonate is f%, satisfying 5≤f≤30, and preferably 10≤f≤30. For example, the mass percentage of EC may be 5%, 10%, 15%, 20%, 25%, 30%, or in a range defined by any two of these values. Since EC is added into the electrolyte, a relatively high dielectric constant of EC is conducive to improving the rate performance of the electrochemical apparatus, and EC permeating through a surface of the silicon-carbon composite material is conducive to the formation of a stable SEI film on a surface of the negative electrode plate, thereby facilitating improvement of the cycling performance of the electrochemical apparatus. However, when the mass percentage of EC is excessively high (for example, higher than 30%), viscosity of the electrolyte is increased, which is not conducive to the migration of lithium ions; and conductivity of the electrolyte is decreased, and EC and lithium ions are collectively intercalated into the silicon-carbon composite material, which reduces the reversible capacity, thereby affecting the rate performance, cycling performance, and capacity of the electrochemical apparatus. Controlling the mass percentage of EC to fall within the foregoing range is conducive to improving the cycling performance and rate performance of the electrochemical apparatus.

In some embodiments of this application, the electrochemical apparatus satisfies 0.2≤a/f≤2, and preferably 0.2≤a/f≤1.5. For example, the value of a/f may be 0.2, 0.4, 0.6, 0.8, 1, 1.2, 1.5, 2, or in a range defined by any two of these values. When the value of a/f is excessively small (for example, less than 0.2), that is, the median particle size of the silicon-carbon composite material is relatively small or the mass percentage of EC is relatively high, the rate performance of the electrochemical apparatus is affected. When the value of a/f is excessively large (for example, greater than 2), that is, the median particle size of the silicon-carbon composite material is relatively large or the mass percentage of EC is relatively low, the cycling performance, the swelling performance, and the rate performance of the electrochemical apparatus are affected. Controlling the value of a/f to fall within the foregoing range is conducive to a synergistic effect between the silicon-carbon composite material and EC in the electrolyte, improving the cycling performance, swelling performance, and rate performance of the electrochemical apparatus.

In some embodiments of this application, the electrolyte includes propylene carbonate (PC), and based on the total mass of the electrolyte, a mass percentage of propylene carbonate is g%, satisfying 5≤g≤40, and preferably 10≤g≤30. For example, the mass percentage of PC may be 5% 10%, 20%, 30%, 40%, or in a range defined by any two of these values. Since PC is added into the electrolyte, a relatively high dielectric constant of PC is conducive to improving the rate performance of the electrochemical apparatus, and PC permeating through a surface of the silicon-carbon composite material is conducive to the formation of a stable SEI film on a surface of the negative electrode plate, thereby facilitating improvement of the cycling performance of the electrochemical apparatus. However, when the mass percentage of PC is excessively high (for example, higher than 40%), viscosity of the electrolyte is increased, which is not conducive to the migration of lithium ions; and conductivity of the electrolyte is decreased, and there is a risk of PC precipitation, thereby affecting the cycling performance, swelling performance, and rate performance of the electrochemical apparatus. Controlling the mass percentage of PC to fall within the foregoing range is conducive to improving the cycling performance and rate performance of the electrochemical apparatus.

In some embodiments of this application, a method for preparing the silicon-carbon composite material includes the following steps: (1) placing the porous carbon framework to a first deposition reaction in a silane atmosphere, where the pore volume of the porous carbon framework ranges from 0.5 mL/g to 2.0 mL/g, and based on the pore volume of the porous carbon framework, the pore volume percentage of micropores and mesopores ranges from 70% to 90%; and a volume percentage of silane in the silane atmosphere ranges from 1% to 30%, temperature of the first deposition reaction ranges from 400°C to 600°C, and time thereof ranges from 1 h to 12 h; and (2) then conducting a second deposition reaction in an oxygen atmosphere to obtain the silicon-carbon composite material, where a volume percentage of oxygen in the oxygen atmosphere ranges from 1% to 30%, temperature of the second deposition reaction ranges from 400°C to 800°C, and time thereof ranges from 1 h to 12 h. For the silicon-carbon composite material prepared according to the foregoing preparation method, the silicon material is intercalated into the micropores and mesopores of the porous carbon framework, so that not only the advantage of high gram capacity of the silicon material can be exerted to improve the specific capacity of the electrochemical apparatus, but also the porous carbon framework provides enough space for the volume swelling of the silicon material to release the swelling stress caused by the volume swelling, which is conducive to improving the cycling performance and the swelling performance of the electrochemical apparatus. Herein, the foregoing siloxane atmosphere and oxygen atmosphere further include an inert gas and the inert gas may include but is not limited to at least one of nitrogen, argon, or helium.

During preparation of the silicon-carbon composite material, the median particle size of the porous carbon framework may be adjusted to adjust the median particle size of the silicon-carbon composite material. In general, an increased median particle size of the porous carbon framework leads to an increased median particle size of the silicon-carbon composite material; and a decreased median particle size of the porous carbon framework leads to a decreased median particle size of the silicon-carbon composite material. The median particle size of the porous carbon framework is not particularly limited in this application, provided that the foregoing median particle size of the silicon-carbon composite material can be met. For example, the median particle size of the porous carbon framework ranges from 1 µm to 20 µm.

The temperature and time of the first deposition reaction and the second deposition reaction generally affect performance of the silicon-carbon composite material. For example, increased temperature of the first deposition reaction can lead to increased crystallization of the silicon material, which is conducive to improving the first-cycle coulombic efficiency of the electrochemical apparatus, but affects the swelling performance of the electrochemical apparatus; and increased temperature of the second deposition reaction can lead to an increased thickness of a passivation layer on the surface of the silicon material, thereby improving processing stability of the silicon-carbon composite material. A prolonged first deposition reaction is conducive to an increased proportion of silicon in the silicon-carbon composite material and an increased specific capacity of the electrochemical apparatus, but an excessively high proportion of silicon affects the swelling performance of the electrochemical apparatus; and a prolonged second deposition reaction can lead to an increased thickness of the passivation layer on the surface of the silicon material and improved processing stability of the silicon-carbon composite material. A lower temperature of the first deposition reaction leads to a reduced crystallization of the silicon material, which affects the first-cycle coulombic efficiency of the electrochemical apparatus; and a lower temperature of the second deposition reaction is not conducive to the formation of a stable passivation layer on the surface of the silicon material. A shortened first deposition reaction leads to a correspondingly reduced proportion of silicon, and an appropriate proportion of silicon is conducive to improving the cycling performance and swelling performance of the electrochemical apparatus; and a shortened second deposition reaction affects the thickness of the stable passivation layer formed on the surface of the silicon material. Controlling the temperature and time of the first deposition reaction and the temperature and time of the second deposition reaction to fall within the foregoing ranges is conducive to improving the surface stability of the silicon-carbon composite material and improving the first-cycle coulombic efficiency, cycling performance, and swelling performance of the electrochemical apparatus. For example, the porous carbon framework may include but is not limited to at least one of natural graphite, artificial graphite, mesocarbon microbead, hard carbon, or soft carbon, and the silicon material may include but is not limited to at least one of crystalline silicon or amorphous silicon.

In this application, the negative electrode plate further includes a negative electrode current collector. The negative electrode current collector is not particularly limited in this application, provided that the objectives of this application can be achieved. For example, the negative electrode current collector may include but is not limited to copper foil, copper alloy foil, nickel foil, stainless steel foil, titanium foil, nickel foam, copper foam, or a composite current collector. The negative electrode material layer may be provided on one or two surfaces of the negative electrode current collector in a thickness direction of the negative electrode current collector. It should be noted that the "surface" herein may be an entire region of the negative electrode current collector, or may be a partial region of the positive electrode current collector. This is not particularly limited in this application, provided that the objectives of this application can be achieved. In this application, the thickness of the negative electrode current collector is not particularly limited, provided that the objectives of this application can be achieved. For example, the thickness of the negative electrode current collector ranges from 4 µm to 12 µm.

In this application, the negative electrode material layer may further include another negative electrode active material known in the art in addition to the foregoing silicon-carbon composite material. For example, the negative electrode material layer may include but is not limited to at least one of natural graphite, artificial graphite, mesocarbon microbead, hard carbon, soft carbon, silicon, silicon-carbon composite, Li-Sn alloy, Li-Sn-O alloy, Sn, SnO, SnO₂, spinel-structure lithiated TiO₂-Li₄Ti₅O₁₂, or Li-Al alloy.

In this application, the negative electrode material layer may further include a negative electrode conductive agent. The negative electrode conductive agent is not particularly limited in this application, provided that the objectives of this application can be achieved. For example, the negative electrode conductive agent may include but is not limited to at least one of a carbon-based material, a metal-based material, or a conductive polymer. The carbon-based material is selected from at least one of natural graphite, artificial graphite, conductive carbon black, acetylene black, Ketjen black, or carbon fiber. The metal-based material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

In this application, the negative electrode material layer may further include a negative electrode binder. The negative electrode binder is not particularly limited in this application, provided that the objectives of this application can be achieved. For example, the negative electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin, or nylon.

Optionally, the negative electrode plate may further include a conductive layer, and the conductive layer is sandwiched between the negative electrode current collector and the negative electrode material layer. Composition of the conductive layer is not particularly limited in this application, and the conductive layer may be a conductive layer commonly used in the art. The conductive layer may include but is not limited to the foregoing negative electrode conductive agent and negative electrode binder.

The electrolyte in this application further includes a lithium salt and another non-aqueous solvent. The lithium salt is not particularly limited in this application, provided that the objectives of this application can be achieved. For example, the lithium salt may include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. Preferably, the lithium salt includes LiPF₆.

The another non-aqueous solvent is not particularly limited in this application, provided that the objectives of this application can be achieved. For example, the non-aqueous solvent may include but is not limited to at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or ethyl methyl carbonate (EMC). The cyclic carbonate may include but is not limited to at least one of butylene carbonate (BC) or vinyl ethylene carbonate (VEC). The fluorocarbonate compound may include but is not limited to at least one of fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, or 4-trifluoroMethyl ethylence carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The ether compound may include but is not limited to at least one of dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, dimethylformamide, acetonitrile, trimethyl phosphate, triethyl phosphate, or trioctyl phosphate. Based on the total mass of the electrolyte, a mass percentage of the foregoing another non-aqueous solvent ranges from 17% to 83%, for example, being 17%, 17.5%, 20%, 30%, 40%, 50%, 60%, 70%, 80%, 82.5%, 83%, or in a range defined by any two of these values.

The electrochemical apparatus in this application may further include a positive electrode plate. The positive electrode plate is not particularly limited in this application, provided that the objectives of this application can be achieved. For example, the positive electrode plate generally includes a positive electrode current collector and a positive electrode material layer. The positive electrode material layer may be provided on one or two surfaces of the positive electrode current collector in a thickness direction of the positive electrode current collector. It should be noted that the "surface" herein may be an entire region or a partial region of the positive electrode current collector. This is not particularly limited in this application, provided that the objectives of this application can be achieved. In this application, a positive electrode current collector is not particularly limited, provided that the objectives of this application can be achieved. For example, the positive electrode current collector may include but is not limited to aluminum foil, aluminum alloy foil, or a composite current collector. In this application, the thickness of the positive electrode current collector is not particularly limited, provided that the objectives of this application can be achieved. For example, the thickness of the positive electrode current collector ranges from 8 µm to 12 µm.

In this application, the positive electrode material layer includes a positive electrode active material. The positive electrode active material is not particularly limited in this application, provided that the objectives of this application can be achieved. For example, the positive electrode active material may include at least one of lithium or a composite oxide of a transition metal element. In this application, the transition metal element is not particularly limited, provided that the objectives of this application can be achieved. For example, the transition metal element may include at least one of nickel, manganese, cobalt, or iron. Specifically, the positive electrode active material may include at least one of nickel cobalt lithium manganate, lithium nickel cobalt aluminate, lithium iron phosphate, a lithium-rich manganese-based material, lithium cobalt oxide, lithium manganate, lithium iron manganese phosphate, or lithium titanate.

In this application, the positive electrode material layer may further include a positive electrode conductive agent. The positive electrode conductive agent is not particularly limited in this application, provided that the objectives of this application can be achieved. For example, the positive electrode conductive agent may include but is not limited to at least one of conductive carbon black (Super P), carbon nanotubes (CNTs), carbon fiber, acetylene black, flake graphite, Ketjen black, graphene, a metal material, or a conductive polymer. Preferably, the positive electrode conductive agent includes conductive carbon black and carbon nanotubes. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole. In this application, the positive electrode material layer may further include a positive electrode binder. The positive electrode binder is not particularly limited in this application, provided that the objectives of this application can be achieved. For example, the positive electrode binder may include but is not limited to at least one of fluoro resin, polypropylene resin, a fiber type binder, a rubber type binder, or a polyimide type binder.

Optionally, the positive electrode plate may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing positive electrode conductive agent and positive electrode binder.

The electrochemical apparatus in this application may further include a separator. The separator is not particularly limited in this application, provided that the objectives of this application can be achieved. The separator may include a substrate layer and a surface treatment layer. The material of the substrate layer is not particularly limited in this application. For example, the material of the substrate layer may include but is not limited to at least one of polyethylene, polypropylene, polytetrafluoroethylene-dominant polyolefin, a polyester film (for example, polyethylene terephthalate), cellulose, polyimide, polyamide, spandex, or aramid. The type of the substrate layer may include but is not limited to at least one of woven film, non-woven film, microporous film, composite film, separator paper, laminated film, or spinning film. The material of the substrate layer is preferably polyethylene or polypropylene, which has a good effect on preventing short circuits and can improve stability of the electrochemical apparatus through a shutdown effect. The separator in this application may have a porous structure. The pore diameter is not particularly limited, provided that the objectives of this application can be achieved. For example, the pore diameter may range from 0.01 µm to 1 µm. The thickness of the separator is not particularly limited in this application, provided that the objectives of this application can be achieved. For example, the thickness of the separator may range from 5 µm to 500 µm.

In this application, the surface treatment layer is provided on at least one surface of the substrate layer, the surface treatment layer is not particularly limited in this application, and the surface treatment layer may be a polymer layer or an inorganic substance layer, or a layer formed by mixing a polymer and an inorganic substance. The inorganic substance layer may include but is not limited to inorganic particles and an inorganic substance layer binder, and the inorganic particles are not particularly limited in this application. For example, the inorganic particles may include but are not limited to at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic substance layer binder is not particularly limited in this application. For example, the inorganic substance layer binder may include but is not limited to at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, the polymer is not particularly limited in this application, and a material of the polymer may include but is not limited to at least one of polyamide, polyacrylonitrile, acrylate polymer, polyacrylic acid, polyacrylate salt, polyvinylpyrrolidone, polyvinyl ether, polyvinylidene fluoride, or poly (vinylidene fluoride-hexafluoropropylene).

The electrochemical apparatus in this application is not particularly limited and may include any apparatus in which an electrochemical reaction takes place. In some embodiments, the electrochemical apparatus may include but is not limited to a lithium-ion battery.

A process for preparing the electrochemical apparatus is well known to persons skilled in the art and is not particularly limited in this application. For example, the process may include but is not limited to the following steps: a positive electrode plate, a separator, and a negative electrode plate are stacked in sequence and go through operations such as winding and folding as needed to obtain an electrode assembly with a wound structure, the electrode assembly is put into a packaging bag, and the packaging bag is injected with an electrolyte and sealed to obtain an electrochemical apparatus; or a positive electrode plate, a separator, and a negative electrode plate are stacked in sequence, four corners of an entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, an overcurrent prevention element, a guide plate, and the like may be placed into the packaging bag as needed, avoiding pressure increase, overcharge, and discharge inside the electrochemical apparatus.

A second aspect of this application provides an electronic apparatus, including the electrochemical apparatus according to any one of the foregoing embodiments. The electrochemical apparatus provided in this application has good cycling performance, swelling performance, and rate performance, so the electronic apparatus provided in this application has a longer service life.

The electronic apparatus in this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

### Examples

The following describes the embodiments of this application more specifically by using examples and comparative examples. Various tests and evaluations were performed in the following methods. In addition, unless otherwise specified, "part" and "%" are based on weight.

### Test method and equipment

### Median particle size test:

Herein, it should be particularly noted that, in the negative electrode plate, because the silicon-carbon composite material was mixed with graphite, a binder, a dispersant, and a conductive material, to more accurately characterize a median particle size of the silicon-carbon composite material in the negative electrode plate, the following definition was used to test and characterize the median particle size of the silicon-carbon composite material in the negative electrode plate: With reference to a scanning electron microscope test method, a scanning electron microscope (ZEISS Sigma-02-33) was used in a backscattering mode (0.1 kV to 30 kV) at a magnification of 100K, particles with a lightest color with respect to color contrast were particles corresponding to the silicon-carbon composite material, a value of a longest distance between two existing points on each of the particles was used as a particle size of the particle, particle sizes of all the silicon-carbon composite materials at the 100K magnification were collected, and an average value was calculated based on all the particle sizes of the silicon-carbon composite material, to obtain the median particle size of the silicon-carbon composite material.

### Porosity test:

The porosity of the negative electrode material layer was tested by using a gas replacement method; and porosity=(V-V0)/V×100%, where a pore volume was V-V0, V0 was a real volume of a sample under test, and V was a total volume of the sample under test. A test device was a fully automatic true density tester (AccuPyc II 1340), and a test gas was helium.

### Tests of the pore volume of porous carbon framework and pore volume percentage of micropores and mesopores:

Test of the pore volume of the porous carbon framework: The pore volume of the porous carbon framework was measured by using a nitrogen adsorption-desorption method. At a low constant temperature of -196°C (77K), nitrogen adsorption volumes on the surface of the porous carbon framework were measured at different relative pressure, a nitrogen adsorption volume when the relative pressure P₀/P was close to 1 (P₀/P>0.99) was viewed as a saturated adsorption volume Vs, and a condensed volume of nitrogen of a saturated adsorption volume was used as the pore volume of the porous carbon framework: V₁=Vs×0.001547. Herein, P₀ referred to ambient pressure, and P referred to the pressure of the gas when nitrogen gas was desorbed.

Calculation of the pore volume percentage of micropores and mesopores: 2g of a powder sample of the silicon-carbon composite material was weighed and added into a test sample tube of a fully automatic specific surface area and porosity analyzer (TriStar II 3020), and after 120 minutes of desorption at 200°C, a nitrogen adsorption-desorption isotherm of the porous carbon framework was measured by using the nitrogen adsorption-desorption method. Pore diameter distribution in the porous carbon framework was calculated by using the nonlinear density functional theory (NLDFT theory), a diagram was formulated with axis x representing the pore diameter and axis y representing the pore volume, thus to obtain a pore diameter distribution curve, and a ratio a of an area Sa under a pore diameter distribution curve in a range of the pore diameter x>0 nm to a total area S under the distribution curve was used as the pore volume percentage of micropores and mesopores in the porous carbon framework, where the ratio a=Sa/S×100%.

### Test of the mass percentage of carbon:

The silicon-carbon composite material was heated and burned in a high-frequency furnace at high temperature under an oxygen-rich condition to oxidize carbon into carbon dioxide. After treatment, the silicon-carbon composite material entered a corresponding absorption cell to absorb corresponding infrared radiation and a corresponding signal was further obtained by a detector through conversion. The signal was sampled by a computer and converted into a value proportional to a concentration of carbon dioxide after linear correction; then values in an entire analysis procedure were added up; and after the analysis, a sum was divided by mass and then multiplied by a correction coefficient in the computer; and a blank was deducted to obtain a mass percentage of carbon in the sample. A high-frequency infrared carbon and sulfur analyzer (Shanghai Dekai Instruments Co., Ltd. HCS-140) was used for the test.

### Test of the mass percentage of silicon:

5g of the silicon-carbon composite material was weighted and added into a beaker made of polytetrafluoroethylene (PTFE), 10 mL of concentrated nitric acid and 2 mL of hydrofluoric acid were slowly added, and the resulting mixture was heated to 220°C so that the silicon-carbon composite material was completely dissolved to obtain a sample solution. Then the sample solution was shaken and slowly poured into a funnel with single-layer filter paper, and the beaker and filter residue were rinsed three times. Temperature of the solution was 20°C±5°C, the solution was diluted to 100 mL and shaken for uniform mixing, and mass x of silicon in the solution was measured by using an inductively coupled plasma (ICP) device (PE 7000DV), and therefore, a mass percentage y of silicon in the powder was calculated as y=x/5×100%.

### Test of the compacted density:

The compacted density Pa of the negative electrode material layer was calculated by using a formula: Pa=malVa. In the formula, ma was a mass of the negative electrode material layer in a unit of g, and Va was a volume of the negative electrode material layer in a unit of cm³, where the volume Va was a product of area Sa of the negative electrode material layer and thickness of the negative electrode material layer.

### Cycling performance test:

The lithium-ion battery was charged at a constant current of 0.7C to 4.4 V at a test temperature of 25°C, charged at a constant voltage of 4.4 V to 0.025C, left standing for 5 min, and then discharged at a constant current of 0.5C to 3.0 V This was one cycle. Capacity of the lithium-ion battery was measured and recorded as the initial capacity, then the lithium-ion battery was subjected to multiple cycles, and the capacity obtained after each cycle was divided by the initial capacity to obtain a capacity retention rate and a capacity attenuation curve. The number of cycles where the capacity retention rate decayed to 90% was recorded as the number of cycles of the lithium-ion battery at 25°C.

The test temperature was changed to 45°C and the rest were all the same as those at 25°C. The number of cycles where the capacity retention rate decayed to 80% was recorded as the number of cycles of the lithium-ion battery at 45°C.

### Swelling performance test:

At a test temperature of 25°C, thickness of the lithium-ion battery under 50% state of charge (SOC) was measured by using a spiral micrometer and recorded as H0, then the lithium-ion battery was subjected to 500 cycles according to the steps in the cycling performance test, and thickness of the lithium-ion battery under 100% SOC was measured and recorded as H1. Cycling swelling rate at 25°C=(H1-H0)/H0×100%.

The test temperature was changed to 45°C and the rest were all the same as those at 25°C. Then, the cycling swelling rate at 45°C was calculated.

### Rate performance test:

The lithium-ion battery was discharged at a constant current of 0.2C to 3.0 V at a test temperature of 25°C, left standing for 5 min, charged at a constant current of 0.5C to 4.45 V, charged at a constant voltage of 4.45 V to 0.05C, and then left standing for 5 min. The discharge rate was adjusted and discharge tests were separately conducted at 0.2C and 2.0C to obtain corresponding discharge capacities, and a ratio percentage of the discharge capacities at 2.0C and 0.2C was used as a basis for evaluating the rate performance.

### Test of first-cycle reversible capacity:

The lithium-ion battery was discharged at a constant current of 0.2C to 3.0 V at a test temperature of 25°C, left standing for 5 min, charged at a constant current of 0.5C to 4.45 V, charged at a constant voltage of 4.45 V to 0.05C, and then left standing for 5 min, and the measured charge capacity was the first-cycle reversible capacity.

### Test of first-cycle coulombic efficiency:

The lithium-ion battery was discharged at a constant current of 0.2C to 3.0 V at a test temperature of 25°C, left standing for 5 min, charged at a constant current of 0.5C to 4.45 V, charged at a constant voltage of 4.45 V to 0.05C, and then left standing for 5 min, first-cycle charge capacity and first-cycle discharge capacity of the lithium-ion battery were measured, and the first-cycle coulombic efficiency was calculated by using the following formula: first-cycle coulombic efficiency=first-cycle charge capacity/first-cycle discharge capacity×100%.

### Example 1-1

### <Preparation of positive electrode plate>

A positive electrode active material lithium cobalt oxide (LiCoO₂), a positive electrode conductive agent acetylene black, and a positive electrode binder polyvinylidene fluoride were mixed at a mass ratio of 95:2.5:2.5, added with N-methylpyrrolidone (NMP), and well stirred by a vacuum stirrer to obtain a positive electrode slurry with a solid content of 70wt%. The positive electrode slurry was uniformly applied onto a surface of a 12 µm thick positive electrode current collector aluminum foil and dried to obtain a positive electrode plate having a single surface coated with a 110 µm thick positive electrode material layer. The foregoing steps were repeated on the other surface of the positive electrode plate to obtain a positive electrode plate coated with positive electrode material layers on two surfaces. The positive electrode plate was then subjected to cold pressing and cutting to obtain a positive electrode plate with a size of 74 mm×851 mm.

### <Preparation of silicon-carbon composite material>

(1) A porous carbon framework was subjected to a first deposition reaction in a silane atmosphere, where a pore volume of the porous carbon framework was 1 mL/g, a median particle size was 3 µm, and a pore volume percentage of micropores and mesopores was 80%; and a volume percentage of silane in the silane atmosphere was 20%, the rest was nitrogen, temperature of the first deposition reaction was 500°C, and time thereof was 6 h.
(2) A second deposition reaction was conducted in an oxygen atmosphere, a substance obtained in the first deposition reaction was passivated, and silicon exposed in the first deposition reaction was oxidized by oxygen, to obtain a silicon-carbon composite material, where a volume percentage of oxygen in the oxygen atmosphere was 20%, the rest was nitrogen, temperature of the second deposition reaction was 500°C, and time thereof was 5 h.

Herein, a median particle size of the silicon-carbon composite material was 3 µm.

### <Preparation of negative electrode plate>

Graphite, the prepared silicon-carbon composite material, a negative electrode conductive agent conductive carbon black, a negative electrode binder polyacrylic acid, and a thickener sodium carboxymethyl cellulose were mixed at a mass ratio of 86.5:10:2:0.8:0.7, added with deionized water, and well stirred by a vacuum stirrer to obtain a negative electrode slurry with a solid content of 75wt%. The negative electrode slurry was uniformly applied onto one surface of a negative electrode current collector copper foil and dried to obtain a negative electrode plate having a single surface coated with a 130 µm thick negative electrode material layer. The foregoing steps were repeated on the other surface of the copper foil to obtain a negative electrode plate coated with negative electrode material layers on two surfaces. The negative electrode plate was then subjected to cold pressing and cutting to obtain a negative electrode plate with a size of 76 mm×867 mm.

### <Preparation of electrolyte>

In a glove box under an argon atmosphere with a water content less than 10 ppm, specified amounts of EC and DEC were mixed to uniformity to obtain an organic solvent, and then a lithium salt LiPF₆ was added to the organic solvent and mixed to uniformity to obtain an electrolyte. Herein, based on a total mass of the electrolyte, a mass percentage of the lithium salt was 12.5%, a mass percentage of EC was 25%, and DEC accounted for the rest mass.

### <Preparation of separator>

A 7 µm thick polyethylene film (provided by Celgard) was used.

### <Preparation of lithium-ion battery>

The prepared positive electrode plate, separator, and negative electrode plate were stacked in sequence, so that the separator was sandwiched between the positive electrode plate and the negative electrode plate for separation. Then winding was performed to obtain an electrode assembly. The electrode assembly was placed into an aluminum-plastic film packaging bag and dried. Then the electrolyte was injected, and processes such as vacuum packaging, standing, formation, degassing, and trimming were performed to obtain a lithium-ion battery.

### Example 1-2 to Example 1-6

These examples were the same as Example 1-1 except that the median particle size of the porous carbon framework was adjusted so that the median particle size of the silicon-carbon composite material and the porosity of the negative electrode material layer were the same as those shown in Table 1.

### Example 2-1 to Example 2-6

These examples were the same as Example 1-3 except that the median particle size of the porous carbon framework was adjusted so that the compacted density and the porosity of the negative electrode material layer were the same as those shown in Table 2.

### Example 3-1 to Example 3-7

These examples were the same as Example 2-3 except that the parameters in the first deposition reaction and the second deposition reaction were adjusted so that the mass percentages of carbon and silicon in the silicon-carbon composite material were the same as those shown in Table 3.

### Example 4-1 and Example 4-2

These examples were the same as Example 3-3 except that the mass percentage of EC and the median particle size of the silicon-carbon composite material were adjusted according to Table 4.

### Example 4-3 and Example 4-7

These examples were the same as Example 3-3 except that PC was further added when the organic solvent was prepared in <Preparation of electrolyte>, and the mass percentages of EC and PC and the median particle size of the silicon-carbon composite material were adjusted according to Table 4.

### Example 5-1 to Example 5-5

These examples were the same as Example 4-5 except that the silicon-carbon composite material was prepared by using the porous carbon framework shown in Table 5.

### Comparative Example 1-1 and Comparative Example 1-2

These examples were the same as Example 1-1 except that the median particle size of the porous carbon frameowork was adjusted so that the median particle size of the silicon-carbon composite material and the porosity of the negative electrode material layer were the same as those shown in Table 1.

The preparation parameters and performance tests of the examples and the comparative examples are shown in Table 1 to Table 5.

**Table 1**

| | Median particle size a of silicon-carbon composite material (µm) | Porosity b of negative electrode material layer (%) | a/b | Cycles at 25°C (cycles) | Cycling swelling rate at 25°C (%) | Cycles at 45°C (cycles) | Cycling swelling rate at 45°C (%) | Rate performance (%) |
|---|---|---|---|---|---|---|---|---|
| Example 1-1 | 3 | 15 | 0.20 | 966 | 6.7 | 770 | 7.9 | 82.7 |
| Example 1-2 | 5 | 20 | 0.25 | 1000 | 6.8 | 810 | 8.0 | 83.5 |
| Example 1-3 | 8 | 25 | 0.36 | 1075 | 6.9 | 869 | 8.1 | 88.5 |
| Example 1-4 | 10 | 22 | 0.46 | 1010 | 7.5 | 802 | 9.7 | 86.2 |
| Example 1-5 | 12 | 18 | 0.63 | 909 | 8.9 | 701 | 11.2 | 86.7 |
| Example 1-6 | 15 | 15 | 1 | 817 | 10.9 | 612 | 15.7 | 87.2 |
| Comparative Example 1-1 | 20 | 12 | 1.67 | 311 | 18.1 | 198 | 25.9 | 80.0 |
| Comparative Example 1-2 | 5 | 38 | 0.13 | 407 | 12.7 | 229 | 14.9 | 77.1 |

It can be learned from Example 1-1 to Example 1-6, Comparative Example 1-1, and Comparative Example 1-2 that when the ratio of the median particle size of the silicon-carbon composite material to the porosity of the negative electrode material layer, and the median particle size of the silicon-carbon composite material both fall within the ranges defined in this application, and the resulting electrochemical apparatus has better cycling performance, swelling performance, and rate performance. In addition, the porosity of the negative electrode material layer usually affects the performance of the electrochemical apparatus, and when the porosity of the negative electrode material layer falls within the range defined in this application, the resulting electrochemical apparatus has better cycling performance, swelling performance, and rate performance.

**Table 2**

| | Compacted density of negative electrode material layer (g/cm³) | Porosity b of negative electrode material layer (%) | Cycles at 25°C (cycles) | Cycling swelling rate at 25°C (%) | Cycles at 45°C (cycles) | Cycling swelling rate at 45°C (%) | Rate performance (%) |
|---|---|---|---|---|---|---|---|
| Example 1-3 | 1.6 | 25 | 1075 | 6.9 | 869 | 8.1 | 88.5 |
| Example 2-1 | 1.2 | 35 | 921 | 6.6 | 745 | 7.6 | 82.2 |
| Example 2-2 | 1.4 | 31 | 998 | 6.7 | 789 | 7.8 | 85.8 |
| Example 2-3 | 1.5 | 29 | 1028 | 6.8 | 847 | 7.9 | 86.1 |
| Example 2-4 | 1.7 | 23 | 1130 | 7.1 | 885 | 8.2 | 89.6 |
| Example 2-5 | 1.8 | 20 | 952 | 7.8 | 828 | 9.7 | 87.3 |
| Example 2-6 | 2.0 | 16 | 698 | 12.2 | 511 | 14.8 | 83.8 |

The compacted density of the negative electrode material layer also affects the porosity of the negative electrode material layer, thereby further affecting the performance of the electrochemical apparatus. It can be learned from Example 1-3 and Example 2-1 to Example 2-6 that when the compacted density of the negative electrode material layer falls within the range defined in this application, the porosity of the resulting negative electrode material layer also falls within the range defined in this application, and the electrochemical apparatus has good cycling performance, swelling performance, and rate performance.

**Table 3**

| | Mass percentage d of carbon (%) | Mass percentage e of silicon (%) | Mass percentage of oxygen (%) | First-cycle reversible capacity (mAh/g) | Cycles at 25°C (cycles) | Cycling swelling rate at 25°C (%) | Cycles at 45°C (cycles) | Cycling swelling rate at 45°C (%) | Rate performan ce (%) |
|---|---|---|---|---|---|---|---|---|---|
| Example 2-3 | 50 | 45 | 5 | 1766.9 | 1028 | 6.8 | 847 | 7.9 | 86.1 |
| Example 3-1 | 50 | 48 | 2 | 1954.8 | 1145 | 7.2 | 919 | 8.3 | 88.9 |
| Example 3-2 | 53 | 45 | 2 | 1779.0 | 975 | 6.8 | 771 | 7.6 | 87.9 |
| Example 3-3 | 52 | 47 | 1 | 1787.3 | 983 | 7.0 | 837 | 7.2 | 88.3 |
| Example 3-4 | 46 | 48 | 6 | 1889.5 | 914 | 8.7 | 679 | 8.7 | 87.6 |
| Example 3-5 | 46 | 45 | 9 | 1728.3 | 847 | 8.4 | 515 | 8.5 | 85.1 |
| Example 3-6 | 15 | 75 | 10 | 2659 | 533 | 10.9 | 412 | 11.7 | 86.9 |
| Example 3-7 | 75 | 15 | 10 | 700 | 1279 | 6.1 | 1035 | 6.7 | 84.9 |

Proportions of carbon and silicon in the silicon-carbon composite material directly affect the performance of the electrochemical apparatus. It can be learned from Example 2-3 and Example 3-1 to Example 3-7 that when the mass percentages of carbon, oxygen, and silicon in the silicon-carbon composite material fall within the ranges defined in this application, the resulting electrochemical apparatus has good cycling performance, swelling performance, and rate performance, and higher first-cycle reversible capacity.

**Table 4**

| | Median particle size a of silicon-carbon composite material (µm) | Mass percentage f of EC (%) | Mass percentage g of PC (%) | a/f | Cycles at 25°C (cycles) | Cycling swelling rate at 25°C (%) | Cycles at 45°C (cycles) | Cycling swelling rate at 45°C (%) | Rate performance (%) |
|---|---|---|---|---|---|---|---|---|---|
| Example 3-3 | 8 | 25 | / | 0.32 | 983 | 7.0 | 837 | 7.2 | 88.3 |
| Example 4-1 | 8 | 30 | / | 0.27 | 1133 | 6.7 | 887 | 7.8 | 88.9 |
| Example 4-2 | 10 | 30 | / | 0.30 | 1018 | 7.9 | 826 | 9.2 | 87.2 |
| Example 4-3 | 8 | 30 | 30 | 0.27 | 1185 | 7.3 | 912 | 8.2 | 89.1 |
| Example 4-4 | 8 | 5 | 30 | 1.60 | 1056 | 7.7 | 831 | 8.3 | 87.4 |
| Example 4-5 | 8 | 15 | 25 | 0.53 | 1097 | 7.6 | 843 | 8.5 | 87.9 |
| Example 4-6 | 15 | 20 | 30 | 0.75 | 965 | 8.4 | 722 | 11.8 | 86.4 |
| Example 4-7 | 8 | 20 | 5 | 0.4 | 831 | 8.9 | 689 | 12.3 | 86.0 |

| | | | | | | | | | |
|---|---|---|---|---|---|---|---|---|---|
| Note: "/" in Table 4 means that a corresponding preparation parameter does not exist. | | | | | | | | | |

The proportion of the organic solvent component in the electrolyte and a relationship between the solvent and the negative electrode active material usually affect the performance of the electrochemical apparatus. It can be learned from Example 3-3, Example 4-1, and Example 4-2 that when the electrolyte includes EC and the mass percentage of EC falls within the range defined in this application, the resulting electrochemical apparatus has good cycling performance, swelling performance, and rate performance. It can be learned from Example 4-3 to Example 4-7 that when the electrolyte both includes EC and PC, and the mass percentages of EC and PC fall within the ranges defined in this application, the resulting electrochemical apparatus has good cycling performance, swelling performance, and rate performance. It can be learned from Example 3-3 and Example 4-1 to Example 4-7 that when the value of a/f falls within the range defined in this application, the resulting electrochemical apparatus has good cycling performance, swelling performance, and rate performance.

**Table 5**

| | Pore volume of porous carbon framework (mL/g) | Pore volume percentage of micropores and mesopores (%) | First-cycle coulombic efficiency (%) | Cycles at 25°C (cycles) | Cycling swelling rate at 25°C (%) | Cycles at 45°C (cycles) | Cycling swelling rate at 45°C (%) | Rate performan ce (%) |
|---|---|---|---|---|---|---|---|---|
| Example 4-5 | 1 | 80 | 89.1 | 1097 | 7.6 | 843 | 8.5 | 87.9 |
| Example 5-1 | 0.5 | 80 | 90.3 | 901 | 8.9 | 689 | 10.8 | 88.9 |
| Example 5-2 | 2 | 80 | 89.5 | 1106 | 6.6 | 919 | 7.8 | 88.0 |
| Example 5-3 | 2 | 70 | 89.1 | 932 | 7.7 | 808 | 9.7 | 87.2 |
| Example 5-4 | 2 | 90 | 90.6 | 1189 | 6.4 | 977 | 7.3 | 89.5 |
| Example 5-5 | 3 | 50 | 83.2 | 710 | 11.9 | 453 | 16.7 | 79.3 |

The porous carbon framework used in preparation of the silicon-carbon composite material directly affects the performance of the silicon-carbon composite material, and further affects the performance of the electrochemical apparatus. It can be learned from Example 4-5 and Example 5-1 to Example 5-5 that when the pore volume of the porous carbon framework and the pore volume percentage of micropores and mesopores fall within the ranges defined in this application, the resulting electrochemical apparatus has better cycling performance, swelling performance, and rate performance.

It should be noted that relational terms such as "first" and "second" are only used to distinguish one entity or operation from another entity or operation, and do not necessarily claim or imply that there is any such actual relationship or order between these entities or operations. In addition, terms "comprise", "include", or any of their variants are intended to cover a non-exclusive inclusion, so that a process, a method, an article, or a device that includes a series of elements not only includes those elements but also includes other elements that are not expressly listed, or further includes elements inherent to such process, method, article, or device.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the principle of this application shall fall within the protection scope of this application.

## Claims

1. An electrochemical apparatus, comprising a negative electrode plate, wherein the negative electrode plate comprises a negative electrode material layer, the negative electrode material layer comprises a silicon-carbon composite material, the silicon-carbon composite material comprises a porous carbon framework and a silicon material, a median particle size of the silicon-carbon composite material is a µm, satisfying 3≤a≤15, a porosity of the negative electrode material layer is b%, and the electrochemical apparatus satisfies 0.15≤a/b≤1.

2. The electrochemical apparatus according to claim 1, wherein the porosity b% of the negative electrode material layer satisfies 15≤b≤35.

3. The electrochemical apparatus according to claim 1, wherein a compacted density of the negative electrode material layer ranges from 1.2 g/cm³ to 1.8 g/cm³.

4. The electrochemical apparatus according to claim 1, wherein based on a mass of the silicon-carbon composite material, a mass percentage of carbon in the silicon-carbon composite material is d%, satisfying 15≤d≤75, a mass percentage of silicon in the silicon-carbon composite material is e%, satisfying 15≤e≤75, and a mass percentage of oxygen in the silicon-carbon composite material ranges from 0.3% to 10%.

5. The electrochemical apparatus according to claim 1, wherein a pore volume of the porous carbon framework ranges from 0.5 mL/g to 2.0 mL/g, and based on the pore volume of the porous carbon framework, a pore volume percentage of micropores and mesopores ranges from 70% to 90%.

6. The electrochemical apparatus according to claim 1, comprising an electrolyte, wherein the electrolyte comprises ethylene carbonate, and based on a total mass of the electrolyte, a mass percentage of ethylene carbonate is f%, satisfying 5≤f≤30.

7. The electrochemical apparatus according to claim 6, satisfying 0.2≤a/f≤2.

8. The electrochemical apparatus according to claim 6, wherein the electrolyte comprises propylene carbonate, and based on the total mass of the electrolyte, a mass percentage g% of propylene carbonate satisfies 5≤g≤40.

9. The electrochemical apparatus according to any one of claims 1 to 8, wherein a method for preparing the silicon-carbon composite material comprises the following steps:
(1) placing the porous carbon framework to a first deposition reaction in a silane atmosphere, wherein the pore volume of the porous carbon framework ranges from 0.5 mL/g to 2.0 mL/g, and based on the pore volume of the porous carbon framework, the pore volume percentage of micropores and mesopores ranges from 70% to 90%; and a volume percentage of silane in the silane atmosphere ranges from 1% to 30%,a temperature of the first deposition reaction ranges from 400°C to 600°C and a time ranges from 1 h to 12 h; and
(2) then conducting a second deposition reaction in an oxygen atmosphere to obtain the silicon-carbon composite material, wherein a volume percentage of oxygen in the oxygen atmosphere ranges from 1% to 30%, a temperature of the second deposition reaction ranges from 400°C to 800°C, and a time thereof ranges from 1 h to 12 h.

10. The electrochemical apparatus according to any one of claims 1 to 9, wherein the electrochemical apparatus satisfies at least one of the following conditions:
(1) a satisfies 6≤a≤15;
(2) a/b satisfies 0.3≤a/b≤1;
(3) b satisfies 18≤b≤30;
(4) the compacted density of the negative electrode material layer ranges from 1.4 g/cm³ to 1.8 g/cm³;
(5) d satisfies 40≤d≤75;
(6) e satisfies 40≤e≤75;
(7) d/e satisfies 0.8≤d/e≤3;
(8) the mass percentage of oxygen in the silicon-carbon composite material ranges from 1% to 6%;
(9) the pore volume of the porous carbon framework ranges from 0.8 mL/g to 2.0 mL/g;
(10) the pore volume percentage of micropores and mesopores in the porous carbon framework ranges from 80% to 90%;
(11) f satisfies 10≤f≤30;
(12) a/f satisfies 0.2≤a/f≤1.5; and
(13) g satisfies 10≤g≤30.

11. An electronic apparatus, comprising the electrochemical apparatus according to any one of claims 1 to 10.
